# EUROPÄISCHE PATENTSCHRIFT

(11) **EP 0 399 256 B1**
(45) Veröffentlichungstag und Bekanntmachung des Hinweises auf die Patenterteilung: **13.10.1993**
(21) Anmeldenummer: 90108308.9
(22) Anmeldetag: 02.05.1990
(51) Int. Cl.: A01D 80/00, A01D 78/10

(54) **Laufradsteuerung für ein landwirtschaftliches Gerät,insbesondere für eine Heuwerbungsmaschine**
Supporting wheel controlling means for an agricultural implement, especially for a hay making machine
Réglage de roue support pour outillage agricole , notamment pour une machine à fenaison

(30) Priorität: 26.05.1989 DE 3917091
(43) Veröffentlichungstag der Anmeldung: 28.11.1990
(73) Patentinhaber: Maschinenfabriken Bernard Krone GmbH, D-48480 Spelle (DE)
(72) Erfinder: Krone, Bernard, D-4441 Spelle (DE); Kreienbaum, Hubert, D-4424 Stadtlohn (DE); Horstmann, Josef, Dipl.-Ing., D-4530 Ibbenbüren (DE)
(74) Vertreter: Döring, Wolfgang, Dr.-Ing. Patentanwälte Hauck, Graalfs, Wehnert, Döring, Siemons

(56) Entgegenhaltungen:
- AT-B- 257 235
- AT-B- 309 129
- DE-A- 2 125 847

## Beschreibung

Die Erfindung betrifft eine Laufradsteuerung für ein landwirtschaftliches Gerät mit den im Oberbegriff des Patentanspruchs 1 angegebenen Merkmalen.

Bei Heuwerbungsmaschinen zum Zetten/Wenden und Schwaden mit mehreren um lotrechte Drehachsen rotierenden und angetriebenen Kreiseln sind verschiedene Laufradsteuerungen bekannt. Eine bekannte Laufradsteuerung wird in der DE-A-2 125 847 beschrieben. Zutreffend wird hier auf die Notwendigkeit einer Verstellung der Lauf- oder Tragräder in eine Winkellage zum Rahmenbalken der Heuwerbungsmaschine zum Zwecke einer Grenzstreifenbildung beim erstmaligen Umfahren eines Bearbeitungsgeländes hingewiesen.

Ebenfalls weist man darauf hin, daß es von Nachteil ist, wenn auf Grund der axialen Steuerung mittels feststellbarer Hebel für die Lauf- und Tragradverstellung bei bekannten Heuwerbungsmaschinen an jedem Kreisel die horizontale, quer über die gesamte Gerätebreite geführte Antriebswelle für mehrere Kegelräder an der Stelle unterbrochen werden muß, an der die vertikale Achse des Lauf- und Tragrades durch das Gehäuse geführt wird.

Diese Konstruktion ist sehr aufwendig und pro zusätzlichem Kegelradsatz müssen ca. 3 % Antriebsverluste berücksichtigt werden.

Zur Beseitigung der aufgeführten Probleme schlägt man nun gemäß der DE-A-2 125 847 vor, der steuerbaren Schwenkachse für das Lauf- und Tragrad im Bereich des Getriebegehäuses eine Form zu geben, die einen Durchgang der Antriebswelle ermöglicht. Eine derartige Laufradsteuerung, die die Merkmale des Oberbegriffs des Patentanspruchs 1 aufweist, besitzt eine zylinderförmige Verstärkung der steuerbaren Schwenkachsen, in der eine horizontale Aussparung oder Durchbohrung bzw. Ausfräsung vorhanden ist. Die über die gesamte Gerätebreite geführte Antriebswelle wird mit Spiel durch die Aussparung geführt, und über die Schwenkachse ist je nach Größe der Aussparung in einem vorgegebenen Winkelbereich die Stellung des Lauf- und Tragrades zum Rahmenbalken einstellbar. Von ihren Funktionseigenschaften und von der Antriebskraft ausgehend, haben sich diese Geräte in der Praxis bewährt. Es haftet ihnen jedoch der Nachteil an, daß der Austausch beispielsweise eines kompletten Kreisels mit Kreuzarmen, Zinken und Lauf- und Tragrad sehr aufwendig ist. Es müssen bei einer Demontage eines Kreisels immer die über die Gerätebreite geführte Antriebswelle mit den auf ihr befindlichen Lagern und Kegelrädern entfernt werden, damit die Schwenkachsen des Lauf- und Tragrades aus dem Gehäuseteil des Rahmenbalkens nach unten in Richtung zum Erdboden herausgenommen werden können. Umgekehrt müssen bei der anschließenden Montage in umgekehrter Reihenfolge sämtliche Handgriffe wiederholt werden, und zusätzlich müssen noch die Kegelräder der Kegelradsätze neu eingestellt werden. Dies bedingt hohe Wartungskosten und entsprechende Stillstandzeiten des Gerätes in der relativ kurzen Erntezeit mit Wetterrisiko usw.

Der Erfindung liegt die Aufgabe zugrunde, eine Laufradsteuerung für ein landwirtschaftliches Gerät, insbesondere für eine Heuwerbungsmaschine, zu schaffen, deren Instandsetzung und De- bzw. Montage besonders einfach und in besonders kurzer Zeit ausführbar ist.

Diese Aufgabe wird erfindungsgemäß durch eine Laufradsteuerung mit den kennzeichnenden Merkmalen des Patentanspruchs 1 gelöst. Vorteilhafte Ausgestaltungen der Erfindung sind in den Patentansprüche 2 bis 5 angeführt.

Aufgrund der Aufschlitzung der steuerbaren Achse für die Lauf- und Tragräder um ein Maß, welches einem geringfügig vergrößerten Durchmessermaß der Antriebswelle entspricht, im Bereich oberhalb der Antriebswelle bzw. oberhalb ihrer horizontalen Aussparung, läßt sich unter Beibehaltung der Steuerbarkeit der Achsen bzw der an ihnen befestigten Lauf- und Tragräder in einem Winkelbereich α eine Demontage der steuerbaren Achsen mit den Kreiseln bei eingebauter Antriebswelle durchführen. Bei in Fahrtrichtung ausgerichtetem Lauf- und Tragrad des Gerätes kann nach dem Lösen bzw. Entfernen von beispielsweise zwei Maschinenschrauben der gesamte Kreisel mitsamt seiner steuerbaren Achse aus dem Getriebegehäuse im Rahmenbalken herausgezogen werden. Umgekehrt ist ein Zusammenbau von Kreisel und Rahmenbalken innerhalb weniger Minuten ausführbar.
Eine Einstellung des Kegelradsatzes kann unterbleiben, da keine Verschiebung od. dgl. der Kegelräder auf der Antriebswelle bzw. auf der steuerbaren Achse bei der De- bzw. Montage erfolgt. Die Kopfplatte wirkt als zentrische Führung am Kopfende der steuerbaren Achse, da hierdurch die schlitzartig unterbrochene Achse einen Zusammenhalt findet und sich in radialer Richtung in einer Führungsbuchse des Rahmenbalkens abstützen kann.

Nachfolgen wird die Erfindung an Hand eines in der Zeichnung dargestellten Ausführungsbeispiels näher erläutert. In der Zeichnung zeigen:

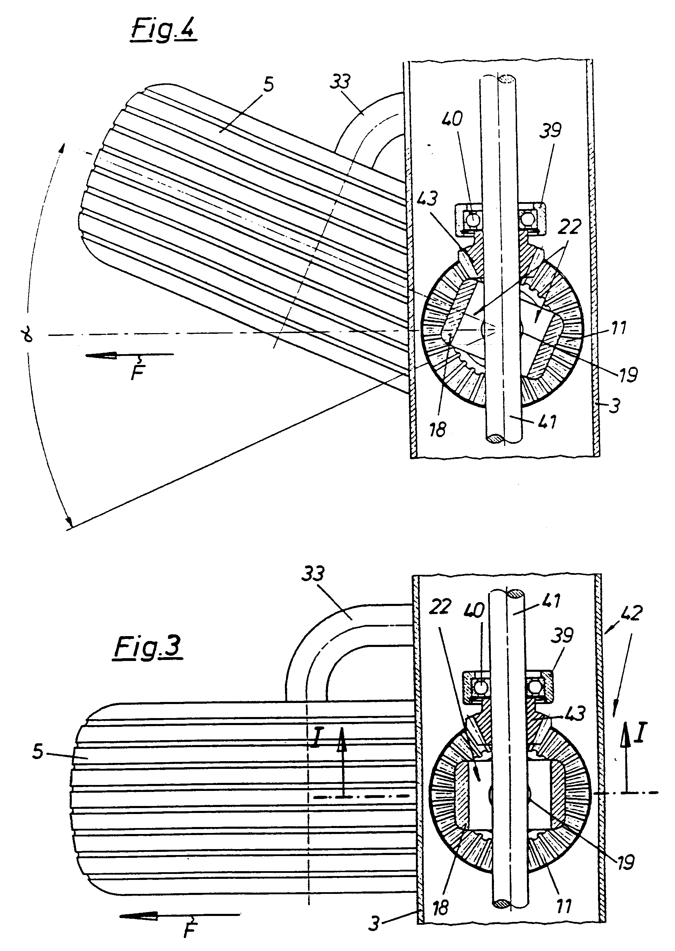

- Fig. 1: ein Ausführungsbeispiel einer Laufradsteuerung mit steuerbarer Achse teilweise in einer Schnittdarstellung nach Linie I - I in Fig. 3;
- Fig. 2: eine Darstellung gemäß Fig. 1, jedoch als De- bzw. Montagezeichnung;
- Fig. 3: eine Schnittdarstellung nach der Linie III - III in Fig. 1; und
- Fig. 4: eine Darstellung gemäß Fig. 3 mit maximal verschwenktem Lauf- und Tragrad.

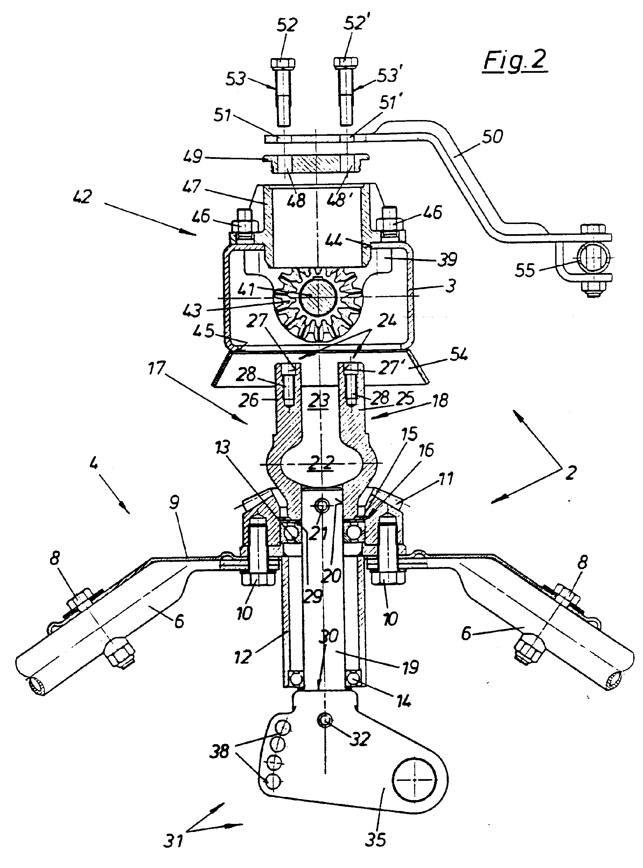

Die in den Figuren nur teilweise dargestellte Heuwerbungsmaschine 1 zum Zetten/Wenden und Schwaden mit einer Laufradsteuerung 2 weist einen Rahmenbalken 3 auf, der sich quer zu der mit Pfeil F angedeuteten Fahrtrichtung der Maschine erstreckt. Die Heuwerbungsmaschine hat vorzugsweise vier bis sechs angetriebene Kreisel 4, von denen in den Figuren nur einer dargestellt ist. Der Rahmenbalken 3 kann mittels eines nicht dargestellten Traggestells an die Dreipunktaufhängung eines ebenfalls nicht dargestellten Schleppers angehängt werden. Jeder Kreisel 4 ist durch ein Lauf- und Tragrad 5 bei der Arbeit am Erdboden abgestützt und weist Werkzeugtragarme 6 auf, an denen Arbeitswerkzeuge 7, wie Zinken, Gabeln od. dgl., angebracht sind. Wie insbesondere aus Fig. 2 ersichtlich, sind die Werkzeugtragarme 6 einmal mit einer Schraube 8 an einem Deckelblech 9 und ein zweites Mal mit dem Deckelblech 9 zusammen mit einer weiteren Schraube 10 an einem Antriebskegelrad 11 und dessen Lager- und Drehrohr 12 befestigt. In dem Antriebskegelrad 11 und dem Lager- und Drehrohr 12 befinden sich Lagersitze mit Lagern 13, 14, beispielsweise Rillenkugellager. Das Lager 13 wird über einen Sicherungsring 15 in einer Ringnut 16 gesichert. Die Innenringe der Lager 13, 14 befinden sich auf einer steuerbaren Achse 17, die zur Erfüllung mehrerer Aufgaben besonders ausgebildet ist. Die steuerbare Achse 17 besteht aus einem Formstück 18 und einem Achsstück 19, wobei das Achsstück 19 in einer Bohrung 20 im Formstück 18 fest eingepaßt ist und über einen Sicherungsstift 21 in einer Querbohrung eine drehfeste Verbindung beider Teile entsteht. Oberhalb der Verbindungsstelle zwischen dem Formstück 18 und dem Achsstück 19 ist in dem Formstück 18 eine quer zur Fahrtrichtung der Heuwerbungsmaschine 1 ausgerichtete ellipsenförmige Aussparung 22 vorgesehen, an der sich eine ebenfalls quer zur Fahrtrichtung F ausgerichtete Aufschlitzung 23 bis zum Kopfende 24 anschließt. In dem Kopfende 24 des Formstückes 18 befinden sich jeweils in den Stegen 25, 26 axial ausgerichtete Paßbohrungen 27, 27', die tieferwerdend in eine Gewindebohrung 28 übergehen. Die zum Erdboden zeigende Seite des Formstückes 18 ist gleichzeitig als Stützring 29 ausgebildet und übernimmt so die Vertikalkräfte, die vom Kreisel 4 über das Lager 13 aufwärts gerichtet sind.

Das zum Erdboden zeigende Ende des Achsstückes 19 ist in einer Aufnahmebohrung 30 einer Streuwinkeleinstellvorrichtung 31 aufgenommen und dort ebenfalls drehfest mit einem Sicherungsstift 32 gesichert. Die Streuwinkeleinstellvorrichtung 31 besteht aus einem Stützrohr 33, welches gleichzeitig als Radachse 34 für das Lauf- und Tragrad 5 ausgebildet ist, einem das Achsstück 19 und das Stützrohr 33 aufnehmenden festen Stellsegment 35 und einem weiteren mit dem Stützrohr 33 drehfest verbundenen zweiten Stellsegment 36. Die Streuwinkeleinstellung erfolgt von Hand bei ausgehobener Heuwerbungsmaschine 1 durch Verdrehen der Stellsegmente 35 und 36 gegeneinander und Sicherung durch einen Bolzen 37 in einem der Rasterbohrungen 38 im Stellsegment 35.
Im Rahmenbalken 3, der als Rechteckrohr ausgebildet ist , befinden sich mehrere Lagerböcke 39 mit Lagern 40, in denen eine Antriebswelle 41 mit im Bereich des Getriebegehäuses 42 befindlichen Kegelrädern 43 gelagert ist. Die Antriebswelle 41 verläuft durch den gesamten Rahmenbalken 3 und ist nur im Bereich einer Schwenkeinrichtung (nicht dargestellt) für den Straßentransport durch Kreuzgelenke unterbrochen. Jeweils im Bereich des Getriebegehäuses 42 ist der Rahmenbalken 3 oben und unten mit einer größeren Bohrung 44, 45 versehen. In der oberen Bohrung 44 ist mittels Schrauben 46 jeweils eine Führungsbuchse 47 fest montiert.

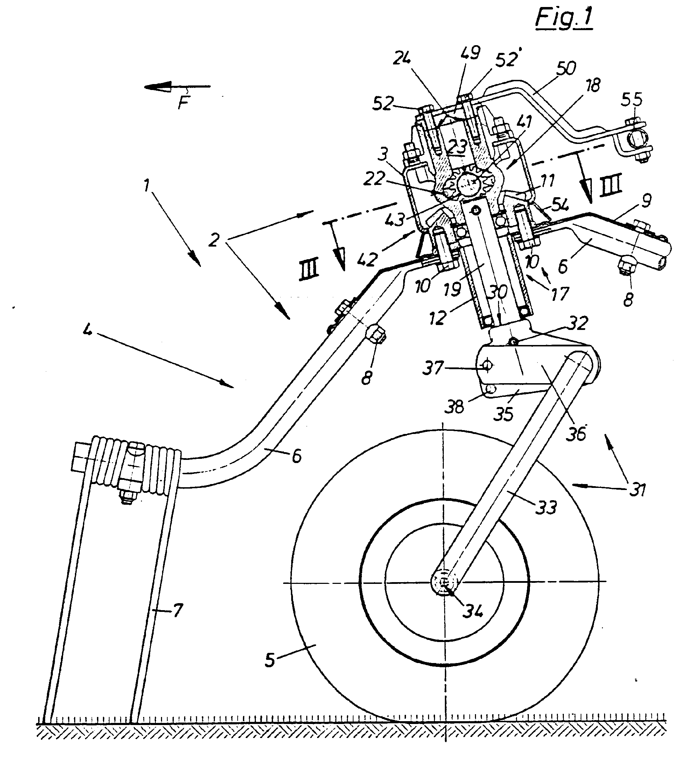

In der Führungsbuchse 47 ist eine mit Paßbohrungen 48, 48' ausgebildete Kopfplatte 49 angeordnet. Oberhalb der Kopfplatte 49 befindet sich ein Steuerhebel 50 mit Paßbohrungen 51, 51'. Die Paßbohrungen 27, 48, 51 und die Paßbohrungen 27', 48' 51' liegen jeweils miteinander fluchtend übereinander und werden von einer Schraube 52 und einer Paßhülse 53 sowie einer Schraube 52' und einer Paßhülse 53' durchdrungen, so daß eine feste Verbindung zwischen der steuerbaren Achse 17, der Kopfplatte 49 und dem Steuerhebel 50 entsteht.
Im Bereich der unteren Bohrung 45 ist ein kreisrundes Kragenblech 54 zur Abdeckung des Bereiches zwischen dem umlaufendem Kreisel 4, insbesondere dem Deckelblech 9, und dem Rahmenbalken 3 vorgesehen. Es hat die Funktion eines Staub- und/oder Wickelschutzes.
Die vorteilhafte De- und Montagemöglichkeit zeigt insbesondere Fig. 2. Beim Montieren kann der gesamte Kreisel 4, insbesondere das Formstück 18 der steuerbaren Achse 17 und das Antriebskegelrad 11 in die Bohrung 45 des Rahmenbalkens 3 eingeführt werden. Das Formstück 18 kann auf Grund seiner Aufschlitzung 23 solange über die Antriebswelle 41 geführt werden, bis die Antriebswelle 41 eine Position in der Mitte der ellipsenförmigen Aussparung 22 einnimmt und das Antriebskegelrad 11 mit dem Kegelrad 43 auf der Antriebswelle 41 kraftschlüssig kämmt. Auf Grund von Fertigungstoleranzen kann hier eine einmalige Einstellung des Kegelradsatzes durch Paßscheiben od. dgl. erfolgen. Wie nun in Fig. 1 dargestellt, ist die steuerbare Achse 17 in der Führungsbuchse 47 drehbar gehalten und durch die Kopfplatte 49 geführt und axial gesichert. Hierbei sind lediglich zwei Schrauben 52 und 52' in das Formstück 18 einzuschrauben, die gleichzeitig noch den Stellhebel 50 mit der steuerbaren Achse 17 verbinden. Der Stellhebel 50 kann über ein Schub- oder Zugrohr 55 zentral verstellt werden. Trotz der einfachen De- und Montage kann das Lauf- und Tragrad 5 in einem Winkelbereich α von beispielsweise ca. 45° einzeln oder auch zentral gesteuert werden.

Ferner hat die zweiteilige Ausbildung der steuerbaren Achse 17 aus Formstück 18 und Achsstück 19 den Vorteil einer kostengünstigen Herstellung, da nur das Formstück 18 besonders ausgebildet und bearbeitet werden muß. Der Übergang vom Formstück 18 zum Achsstück 19 ergibt zusätzlich noch eine kostengünstige Lagerstelle.

## Patentansprüche

1. Laufradsteuerung für ein landwirtschaftliches Gerät, insbesondere für eine Heuwerbungsmaschine (1) zum Zetten/Wenden und Schwaden, mit mehreren um etwa lotrechte Drehachsen rotierenden und angetriebenen Kreiseln (4), mit unter diesen angeordneten richtungssteuerbaren Lauf- und Tragrädern (5), deren steuerbare Achsen (17) im Bereich eines Getriebegehäuses (42) einer durchgehenden Antriebswelle (41) für die Kreisel (4) eine Aussparung (22) zur Aufnahme der durchgehenden Antriebswelle (41) aufweisen und deren Kopfenden (24) jeweils mit einem oberhalb eines die Antriebswelle (41) aufnehmenden Rahmenbalkens (3) befindlichen Steuerhebel (50) verbunden sind, dadurch gekennzeichnet, daß die steuerbaren Achsen (17) oberhalb der Aussparung (22) für die Antriebswelle (41) eine einem geringfügig vergrößerten Durchmessermaß der Antriebswelle (41) entsprechende Aufschlitzung (23) aufweisen und mit ihren Kopfenden (24) jeweils an einer mit dem Steuerhebel (50) verbundenen Kopfplatte (49) befestigt sind.

2. Laufradsteuerung nach Anspruch 1, dadurch gekennzeichnet, daß die Kopfenden (24) mittels Schrauben (52, 52') an den Kopfplatten (49) befestigt sind.

3. Laufradsteuerung nach Anspruch 1 oder 2, dadurch gekennzeichnet, daß die steuerbaren Achsen (17) jeweils aus zwei drehfest miteinander verbundenen Teilstücken, nämlich einem Formstück (18) und einem Achsstück (19), bestehen.

4. Laufradsteuerung nach Anspruch 3, dadurch gekennzeichnet, daß die Unterkante des Formstückes (18) als Stützring (29) zur Aufnahme von Vertikalkräften ausgebildet ist.

5. Laufradsteuerung nach einem der Ansprüche 1 bis 4, dadurch gekennzeichnet, daß die Kopfplatten (49) die steuerbaren Achsen (17) jeweils in einer Führungsbuchse (47) im Rahmenbalken (3) am Kopfende (24) zentrisch führen.

## Claims

1. A running wheel steering means for an agricultural implement, especially for a hay making machine (1) for the tedding/turning and swathing comprising a plurality of driven gyros (4) rotating about approximately vertical axes of rotation, direction-controllable running wheels and support wheels (5) positioned below the gyros, the controllable axes (17) of the running wheels and support wheels (5) have a recess (22) in the range of a gear box (42) of a continuous drive shaft (41) for the gyros (4), the recess serving for the receipt of the continuous drive shaft (41) and the head ends (24) of the drive shaft each being connected with an operating level (50) located above a frame beam (3) receiving the drive shaft (41), characterized in that the steerable axes (17) have a slot (23) above the recess (22) for the drive shaft (41), the slot corresponding to a slightly enlarged diameter of the drive shaft (41), and that the respective steerable axes are fastened with their head ends (24) at a respective head plate (49) which is connected with the operating level (50).

2. The running wheel steering means according to claim 1, characterized in that the ends (24) are fastened to the head plates (49) by means of srews (52, 52').

3. The running wheel steering means according to claim 1 or 2, characterized in that the steerable axes (17) each consists of two part members connected with one another in a fixed manner against rotation, namely a formed part (18) and an axis part (19).

4. The running wheel steering means according to claim 3, characterized in that the lower edge of the formed part (18) is formed as support ring (29) for the receipt of vertical forces.

5. The running wheel steering means according to one of the claims 1 to 4, characterized in that the head plates (49) centrically guide the steerable axes (17) each in a guide sleeve (47) within the frame beam (3) at the head end (24).

## Revendications

1. Dispositif de réglage de roue support pour un engin agricole, en particulier pour une machine de fenaison (1) formant épandeuse-faneuse combinée et andaineuse, et plusieurs disques (4) entraînés et tournant autour d'axes de rotation sensiblement verticaux, et, disposées sous ceux-ci, des roues mobiles porteuses (5) réglables en direction, dont les axes réglables (17) présentent, dans la zone d'un carter de réducteur (42) d'un arbre traversant d'entraînement (41) pour les disques (4), un évidement (22) pour recevoir l'arbre d'entraînement traversant (41) et dont les extrémités de tête (24) sont chacune reliées à un levier de commande (50) situé au-dessus d'une poutre en caisson (3) recevant l'arbre d'entraînement (41),
caractérisé en ce que les axes réglables (17) présentent, au-dessus de l'évidement (22) pour l'arbre d'entraînement (41), une rainure ouverte (23) ayant une dimension légèrement agrandie par rapport au diamètre de l'arbre d'entraînement (41)
et en ce que ces axes réglables sont fixés chacun, avec leur extrémité de tête (24), à une plaque de tête (49) reliée au levier de commande (50).

2. Dispositif de réglage suivant la revendication 1, caractérisé en ce que les extrémités de tête (24) sont fixées aux plaques de tête (49) au moyen de vis (52, 52').

3. Dispositif de réglage suivant la revendication 1 ou la revendication 2, caractérisé en ce que les axes réglables (17) sont chacun constitués de deux éléments reliés entre eux sans possibilité de rotation, à savoir une pièce de forme (18) et une pièce formant axe (19).

4. Dispositif de réglage suivant la revendication 3, caractérisé en ce que l'arête inférieure de la pièce de forme (18) est réalisée sous la forme d'une bague d'appui (29) pour la reprise d'efforts verticaux.

5. Dispositif de réglage suivant l'une quelconque des revendications 1 à 4, caractérisé en ce que chacune des plaques de tête (49) réalise, à l'extrémité de tête (24), un guidage centré des axes réglables (17) dans une douille de guidage (47) placée dans la poutre en caisson (3).
